# EUROPÄISCHE PATENTANMELDUNG

(11) **EP 1 672 402 A1**
(43) Veröffentlichungstag der Anmeldung: **21.06.2006**
(21) Anmeldenummer: 04090489.8
(22) Anmeldetag: 15.12.2004
(51) Int. Cl.: G02B 6/42

(54) **Sende- und Empfangsmodul für eine bidirektionale optische Datenübertragung**

(71) Anmelder: Infineon Technologies Fiber Optics GmbH, 13629 Berlin (DE)
(72) Erfinder: Bachl, Bernhard, 14612 Falkensee (DE); Schell, Martin, 10437 Berlin (DE)
(74) Vertreter: Müller, Wolfram Hubertus

(57) **Zusammenfassung**

Die Erfindung betrifft ein Sende- und Empfangsmodul für eine bidirektionale optische Datenübertragung mit einer mit einem eigenen Gehäuse versehenen Sendeeinheit (1), die Licht einer bestimmten Wellenlänge aussendet, einer mit einem eigenen Gehäuse versehenenen Empfangseinheit (2), die Licht einer bestimmten Wellenlänge detektiert, einem optischen Anschluss (4) für eine mit der Sendeeinheit (1) und der Empfangseinheit (2) optisch gekoppelte oder optische koppelbare Lichtleitfaser (5), einem im Strahlengang zwischen der Sendeeinheit (1) und dem optischen Anschluss (4) und zwischen der Empfangseinheit (2) und dem optischen Anschluss (4) angeordneten Strahlteiler (7), und einem gemeinsamen Modulgehäuse (3), in das die Sendeeinheit (1) und die Empfangseinheit (2) eingefügt sind und das den optischen Anschluss (4) für die Lichtleitfaser (5) bereitstellt. Dabei verlaufen die optischen Achsen (11, 21) von Sendeeinheit (1) und Empfangseinheit (2) winklig zueinander. Erfindungsgemäß ist der Strahlteiler (2) in eines der Gehäuse (14) von Sendeeinheit (1) und Empfangseinheit (2) integriert. Hierdurch können die Länge des Moduls und die Teileanzahl reduziert werden.

## Beschreibung

Die Erfindung betrifft ein Sende- und Empfangsmodul für eine bidirektionale optische Datenübertragung gemäß dem Oberbegriff des Anspruchs 1.

In der EP-A-0 463 214 ist ein gattungsgemäßes, auch als BIDI-Modul bekanntes Sende- und Empfangsmodul für eine bidirektionale optische Signalübertragung beschrieben. Bei diesem Modul sind die beiden aktiven Bauelemente, nämlich Lichtsender und Lichtempfänger als eigenständige Bauelemente hermetisch dicht abgekapselt in einem gemeinsamen Modulgehäuse eingebaut, in dessen Inneren ein Strahlteiler und eine Linsenkoppeloptik angeordnet sind. Das Modulgehäuse weist des weiteren einen Faseranschluss für eine gemeinsame Lichtleitfaser auf. Durch den Sender wird ein optisches Signal in die angekoppelte Glasfaser eingekoppelt, während gleichzeitig ein anderes optisches Signal aus derselben Faser empfangen werden kann. Die Trennung der beiden Signale geschieht durch einen Strahlteiler, der auch einen wellenlängenselektiven Filter enthalten kann, der eine bestimmte Wellenlänge reflektiert und eine andere Wellenlänge durchlässt.

Des Weiteren sind Abwandlungen des in der EP-A 0 463 214 beschriebenen Sende- und Empfangsmoduls bekannt, bei denen die Linsenkoppeloptik (in der Regel eine Kugellinse) in das Gehäuse des Lichtsenders integriert ist.

Die bekannten bidirektionalen Sende- und Empfangsmodule besitzen nachteilig ein relativ langes Modulgehäuse sowie eine Vielzahl von kostenintensiven Einzelteilen im Modulgehäuse, nämlich die Linsenkoppeloptik und den Strahlteiler. Weiter ist die Herstellung der bekannten bidirektionalen Module mit einem relativ aufwändigen Justageprozess verbunden, der sich aus der Verwendung einer Linsenkoppeloptik ergibt.

Der vorliegenden Erfindung liegt dementsprechend die Aufgabe zugrunde, ein Sende- und Empfangsmodul für eine bidirektionale optische Datenübertragung zur Verfügung zu stellen, das sich durch einen einfachen Aufbau mit wenig Einzelteilen und eine kurze Länge auszeichnet.

Diese Aufgabe wird erfindungsgemäß durch ein Sende- und Empfangsmodul mit den Merkmalen des Anspruchs 1 gelöst. Bevorzugte und vorteilhafte Ausgestaltungen der Erfindung sind in den Unteransprüchen angegeben.

Danach zeichnet sich die erfindungsgemäße Lösung dadurch aus, dass der Strahlteiler in eines der Gehäuse von Sendeeinheit und Empfangseinheit integriert ist. Durch die Integration des Strahlteilers in eines der Gehäuse von Sendeeinheit und Empfangseinheit wird die Integrationsdichte des Moduls erhöht und die Anzahl der Einzelteile reduziert, da der Strahlteiler nun nicht mehr als indiviuelles Einzelteil ausgebildet ist. Dies ermöglicht einen einfacheren und kostengünstigeren Aufbau. Durch die Integration des Strahlteilers in eines der Gehäuse von Sendeeinheit und Empfangseinheit wird des Weiteren ermöglicht, den optischen Anschluss des Modulgehäuse und eine darin angeordnete Lichtleitfaser näher an der Sendeeinheit und Empfangseinheit anzuordnen und dadurch die Länge des Modulgehäuses insgesamt zu reduzieren. Dies führt zu einer wünschenswerten Platzersparnis und einer weiteren Erhöhung der Kompaktheit des Moduls.

Die Integration des Strahlteilers in das Gehäuse der Sendeeinheit bzw. das Gehäuse der Empfangseinheit wird bevorzugt dadurch realisiert, dass das Gehäuse eine Kappe mit einem lichtdurchlässigen Fenster aufweist, das lichtdurchlässige Fenster in Bezug auf die optische Achse der Sende- bzw. Empfangseinheit schräg verläuft und der Strahlteiler in das lichtdurchlässige Fenster integriert ist. Es wird somit eine Schrägfensterkappe der entsprechenden Einheit mit einem integriertem Strahlteiler bereitgestellt. Bevorzugt ist die Schrägfensterkappe dabei in der Sendeeinheit ausgebildet, wobei das zu detektierende Licht an dem Strahlteiler der Schrägfensterkappe reflektiert und von der Empfangseinheit detektiert wird.

In einer weiteren bevorzugten Ausgestaltung vermeidet das erfindungsgemäße Sende- und Empfangsmodul die Verwendung einer gesonderten Linsenkoppeloptik im Modulgehäuse zur Kopplung von Licht zwischen der Lichtleitfaser des optischen Anschlusses einerseits und der Sendeeinheit und der Empfangseinheit andererseits. Aufgrund der erfindungsgemäß reduzierten Länge des Modulgehäuses und der Möglichkeit, die Lichtleitfaser nahe an der Sendeeinheit und der Empfangseinheit anzuordnen, ist es zur Einkopplung von Licht von der Sendeeinheit in die Lichtleitfaser ausreichend, eine in die Sendeeinheit integrierte Mikrolinse einzusetzen, die das emittierte Licht fikussiert. Diese Ausgestaltung der Erfindung ist besonders vorteilhaft,insofern, als ein weiteres individuelles Element, nämlich eine Linsenkoppeloptik (in der Regel in Form einer Kugellinse) eingespart wird. Auch vereinfacht sich der Justageprozess, da die Linsenkoppeloptik bei der Justage der einzelnen Komponenten des Moduls nicht mit berücksichtigt werden muss. Ein Verzicht auf eine gesonderte Linsenkoppeloptik im Modulgehäuse ermöglicht des Weiteren, die Länge des Modulgehäuses weiter zu reduzieren.

Der in eines der Gehäuse von Sendeeinheit und Empfangseinheit integrierte Strahlteiler kann mehrere Ausgestaltungen aufweisen. In einer ersten Variante weist der Strahlteiler keine Wellenlängenselektivität auf und teilt der Strahlteiler das empfangene bzw. ausgesandte Licht in einem bestimmten Verhältnis in zwei Strahlen auf. Beispielsweise handelt es sich um einen 3 dB-Strahlteiler, der 50 % des eingestrahlten Lichtes reflektiert bzw. umlenkt. Auch kann beispielsweise ein 5 dB-Strahlteiler eingesetzt werden. Bei Verwendung eines Strahlteilers ohne Wellenlängenselektivität ist die Wellenlänge des emittierten Lichtes der Sendeeinheit und die Wellenlänge des detektierten Lichtes der Empfangseinheit identisch.

In einer zweiten Variante ist der Strahlteiler dagegen wellenlängenselektiv ausgebildet, wobei für diesen Fall das von der Sendeeinheit emittierte Licht und das von der Empfangseinheit zu detektierende Licht unterschiedliche Wellenlängen aufweisen, beispielsweise Wellenlängen von 1310 nm und von 1550 nm. Der Strahlteiler umfasst dann einen wellenlängenselektiven Filter, der in einer ersten Untervariante als WDM- (WDM = Wavelength Division Multiplex) oder DWDM- (DWDM = Dense Wavelength Division Multiplex) Filter ausgebildet ist. In einer zweiten Untervariante kann der wellenlängenselektive Filter auch lediglich als Kantenfilter, d.h. als Hochpassfilter oder als Tiefpassfilter ausgebildet sein, wobei ab einer oder bis zu einer bestimmten Wellenlänge das eingestrahlte Licht reflektiert und Licht anderer Wellenlänge den Filter ohne Ablenkung (höchstens mit einem geringfügigen Strahlversatz aufgrund der Dicke des Filters) passiert. Der Begriff "Strahlteiler" umfasst im Sinne der vorliegenden Erfindung sämtliche dieser erläuterten Varianten.

In einer bevorzugten Ausgestaltung ist in die Empfangseinheit eine Koppeloptik integriert, die empfangenes Licht auf ein Empfangsbauelement der Empfangseinheit fokussiert. Bevorzugt weist dabei das Gehäuse der Empfangseinheit ebenfalls eine Kappe auf und ist die Koppeloptik in die Kappe integriert. Die Koppeloptik kann jedoch auch im Gehäuseinneren realisiert sein. Weiter kann vorgesehen sein, dass die Empfangseinheit mit einem Blockfilter abgedeckt ist, der für von der Sendeeinheit ausgesandtes Licht nichttransparent ist. Der Blockfilter kann in dem Modulgehäuse gelagert sein oder ist alternativ direkt auf dem Gehäuse der Empfangseinheit angeordnet.

In einer Ausgestaltung der Erfindung enthält der optische Anschluss einen fest in dem Modulgehäuse angeordneten (beispielsweise eingeklebten) Faserstummel (Pigtail-Lösung). Alternativ ist der optische Anschluss als Steckerbuchse für einen optischen Stecker ausgebildet.

Die optischen Achsen von Sendeeinheit und Empfangseinheit verlaufen winklig. Beispielsweise verlaufen die optische Achse der Sendeeinheit und die optische Achse der Empfangseinheit in einem Winkel von 55° bis 65°, bevorzugt in einem Winkel von 60° zueinander.

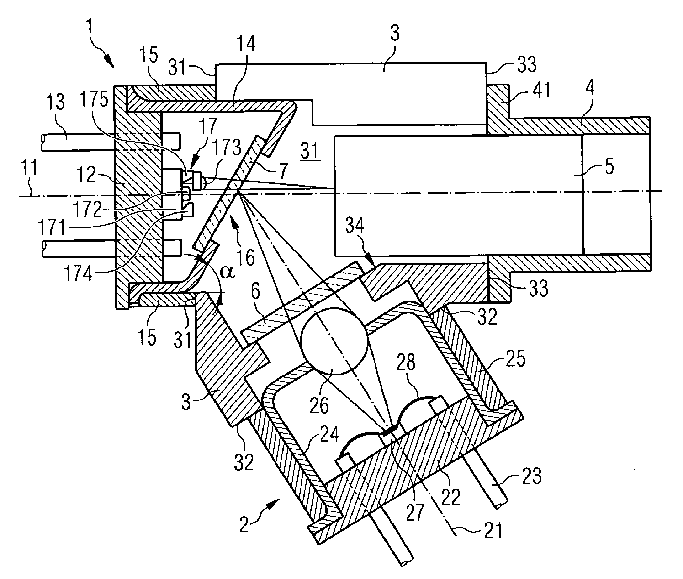

Die Erfindung wird nachfolgend unter Bezugnahme auf die Figur der Zeichnung anhand eines Ausführungsbeispieles näher erläutert.

Die einzige Figur zeigt ein erfindungsgemäßes Sende- und Empfangsmodul für eine bidirektionale Datenübertragung.

Das Sende- und Empfangsmodul weist als Hauptkomponenten eine Sendeeinheit 1, eine Empfangseinheit 2, ein Modulgehäuse 3 sowie einen optischen Anschluss 4 auf. In dem optischen Anschluss 4 ist ein in das Gehäuseinnere 31 des Modulgehäuses 3 hineinragender Faserstummel 5 angeordnet, der aus einer Ferrule mit einer mittig angeordneten, nicht gesondert dargestellten Lichtleitfaser besteht. Der Einfachheit halber wird der Faserstummel 5 nachfolgend auch als Lichtleitfaser bezeichnet.

Die Sendeeinheit 1 und die Empfangseinheit 2 sind jeweils mit einem hermetisch dichten TO-Gehäuse versehen. Dabei weist die Sendeeinheit 1 in an sich bekannter Weise eine bevorzugt metallische Grundplatte 12 auf, durch die im Bereich von nicht gesondert dargestellten Einglasungen eine Mehrzahl elektrischer Anschlusspins 13 durchgeführt sind. Eine metallische Kappe 14 ist auf die Grundplatte 12 aufgesetzt und beispielsweise durch eine Ringbuckelschweißung mit dieser verbunden. Die Kappe 16 weist eine Aussparung 16 auf, in der ein Glasfenster mit einem integrierten Strahlteiler 7 eingelötet ist, um einen optischen Durchgang zu gewährleisten. Auf die genaue Ausbildung des Glasfensters wird weiter unten noch im einzelnen eingegangen werden.

Auf der Bodenplatte 12 befindet sich ein Mikromodul 17, das aus einem Trägersubstrat 171, einer kantenemittierenden Laserdiode 172, einer Monitordiode 174, einer Umlenkvorrichtung 175 und einem Träger mit einer integrierten Mikrolinse 173 besteht. Das von der Laserdiode 172 emittierte Licht wird dabei durch die Umlenkvorrichtung 175 um 90° umgelenkt und durchstrahlt die Mikrolinse 173 auf dem Weg zum Glasfenster 7. Ein Teil des Lichtes des Laserdiode 172 wird durch die Monitordiode 174 detektiert. Eine elektrische Kontaktierung der Laserdiode 172 und der Monitordiode 174 erfolgt über die Anschlusspins 13, beispielsweise über nicht dargestellte Bonddrähte. Derartige Mikromodule 17 sind an sich bekannt, so dass auf deren Aufbau nicht näher eingegangen wird.

Um die Kappe 14 herum ist eine metallische Hülse 15 angeordnet, mittels der die Sendeeinheit 1 an dem Modulgehäuse 3 befestigt ist.

In ähnlicher Weise weist die Empfangseinheit 2 eine Grundplatte 22, elektrische Anschlusspins 23, eine mit der Grundplatte 22 verschweißte Kappe 24 und eine metallische Hülse 25 auf. Auf der Grundplatte 22 ist ein Empfangsbauelement, insbesondere eine Fotodiode 27 angeordnet. In die TO-Kappe 24 ist eine Kugellinse 26 eingebracht, zu detektierendes Licht auf die fotoempfindliche Fläche des Empfangsbauelementes 27 fokussiert. Eine Kontaktierung des Empfangsbauelementes 27 erfolgt über die Anschlusspins 23 und beispielsweise Bonddrähte 28.

Das Modulgehäuse 3 weist mehrere Anschlagflächen 31, 32, 33 auf, die Öffnungen des Modulgehäuses 3 begrenzen. An die Anschlagflächen 31 ist die Hülse 35 der Sendeeinheit 1 zur Anlage gebracht und mit dieser durch Schweißen oder mittels anderer Befestigungstechniken wie z.B. Kleben befestigt. An die Anschlagflächen 32 grenzt die Hülse 25 der Empfangseinheit 2 an. Eine feste Verbindung erfolgt wiederum durch Schweißen oder andere Verbindungstechniken. An die Anschlagflächen 33 grenzt ein Flansch 41 eines Anschlussteils 4 an, das den optischen Anschluss des Moduls bereitstellt und der Aufnahme und Positionierung des Faserstummels 5 dient. Eine Verbindung zwischen dem Flansch 41 und der Anschlagfläche 33 erfolgt wiederum durch Schweißen oder andere Verbindungstechniken.

Es ist bei dem Sende- und Empfangsmodul vorgesehen, das transparente Fenster 7 der Sendeeinheit 1 gegenüber der optischen Achse 11 der Sendeeinheit unter einem Winkel α ungleich 90°, also schräg anzuordnen und dabei das transparente Fenster 7 als Strahlteiler auszubilden. Hierzu sind die Kappe 14 und auch die Hülse 35 asymmetrisch ausgebildet, wobei gegenüberliegende Seitenbereiche der Kappe 14 und der Hülse 15 sich unterschiedlich weit in Richtung des optischen Anschlusses 4 erstrecken. Der Strahlteiler 7 wird durch Filterschichten realisiert, die auf das transparente Fenster aufgetragen sind.

Bei der Verwendung gleicher Wellenlängen für die Sendeeinheit 1 und die Empfangseinheit 2 ist der Strahlteiler 7 beispielsweise als 3 dB- oder als 5 dB-Filter ausgebildet. Bei Verwendung unterschiedlicher Wellenlängen, die die Sendeeinheit emittiert bzw. die Empfangseinheit 2 detektiert, ist der Strahlteiler 7 als wellenlängenselektiver Filter, beispielsweise als WDM- oder DWDM-Filter oder als Kantenfilter ausgebildet.

Die Funktionsweise ist derart, dass von der Lichtleitfaser 5 emittiertes Licht vollständig (bei einem WDM-, DWDM- oder Kantenfilter) oder teilweise (bei einem 3 dB- oder 5 dB-Filter) an dem Strahlteiler 7 reflektiert wird. Die Empfangseinheit 2 ist derart in Bezug auf das Modulgehäuse 3 angeordnet, dass die Mittenachse des reflektierten Lichtes mit der optischen Achse 21 der Empfangseinheit 2 übereinstimmt. Das reflektierte Licht wird durch die in der Kappe 24 integrierte Kugellinse 26 fokussiert und von dem Empfangsbauelement 27 detektiert. Dabei ist in der Figur dargestellten Ausgestaltung zusätzlich ein Blockfilter 6 vorgesehen, der optional ist. Der Blockfilter 6 ist innerhalb des Gehäuses an Anschlagflächen 34 befestigt. Die Verwendung eines Blockfilters 6 ist sinnvoll bei Verwendung unterschiedlicher Wellenlängen, die die Sendeeinheit 1 und die Empfangseinheit 2 emittieren bzw. detektieren. Der Blockfilter 6 ist dabei für die Wellenlänge des von der Sendeeinheit 1 emittierten Lichtes nichttransparent und lässt lediglich die Wellenlänge des zu detektierenden Lichtes durch. Hierdurch wird ein Übersprechen zur Empfangseinheit 2 vermieden.

Das von der Sendeeinheit 1 bzw. dessen Laserdiode 172 ausgesandte Licht wird durch die Mikrolinse 173 fokussiert und durchtritt den Sperrfilter 7 im Wesentlichen geradlinig. Es tritt lediglich ein geringfügiger Versatz auf. Die Stirnfläche der in dem Faserstummel 5 angeordneten Lichtleitfaser ist derart von der Mikrolinse 173 beabstandet, dass sie im Wesentlichen im Fokus der Mikrolinse 173 liegt.

Der Abstand zwischen der Mikrolinse 173 und der Stirnfläche der Lichtleitfaser 5 beträgt dabei bevorzugt ca. 2,8 mm. Der Abstand zwischen der dem Faserstummel 5 zugewandten Seite des Filters 7 und der Stirnfläche der Lichtleitfaser 5 beträgt bevorzugt ca. 2,2 mm. Der Abstand zwischen der dem Faserstummel 5 zugewandten Seite des optischen Filters 7 und dem Empfangsbauelement 27 der Empfangseinheit 2 beträgt bevorzugt ca. 6,5 mm.

Durch die Ausbildung des Strahlteilers 7 in der Kappe 14 der Sendeeinheit, die Anordnung der Lichtleitfaser 5 in unmittelbarer Nähe der Sendeeinheit 1 und die damit verbundene Einsparung einer gesonderten Koppellinse zur Lichteinkopplung in und aus der Lichtleitfaser wird ein äußerst kompaktes Design mit einer kurzen Länge des Modulgehäuses und wenig Einzelteilen bereitgestellt.

Die Justage der Sendeeinheit 1 und der Empfangseinheit 2 an dem Modulgehäuse 3 kann beispielsweise durch aktive Justage erfolgen. Ebenso ist es möglich, dass insbesondere die Sendeeinheit 1 passiv justiert wird, wozu beispielsweise an der Anschlagfläche 31 des Modulgehäuses 3 passive Justagestrukturen (nicht gesondert dargestellt) vorgesehen sind. Die Justage der einzelnen Teile zueinander ist allgemein relativ einfach, da nicht mehr wie beim Stand der Technik ein Schielwinkel zu einer Linsenkoppeloptik im Gehäuseinneren eingestellt werden muss. Dies vereinfacht auch die Montage und Justage des Lichtleitfaser 5. Die Empfangseinheit 2 kann in einer Ausgestaltung mit einer an sich bekannten Handjustagevorrichtung justiert und dann entweder geschweißt oder alternativ geklebt werden.

Es wird darauf hingewiesen, dass der optische Anschluss 4 auf vielfältige Weise ausgebildet sein kann und die in der Figur dargestellte Ausgestaltung lediglich beispielhaft zu verstehen ist. Insbesondere kann in einer Ausgestaltung der Faserstummel 5 fest in das Anschlussteil 4 eingesetzt und eingeklebt sein und dabei ein sogenanntes Pigtail bilden, das aus dem Modul herausragt und an seinem Ende einen optischen Stecker zur steckbaren Verbindung mit einem weiteren Lichtwellenleiter besitzt. Alternativ kann der optische Anschluss als Steckeraufnahme bzw. als Steckerbuchse zur Ankopplung und Aufnahme eines optischen Steckers ausgebildet sein. Der Faserstummel 5 ist dabei Teil des optischen Steckers. In dieser Ausgestaltung ist ein optischer Stecker direkt steckbar mit dem Modul koppelbar.

Die Erfindung beschränkt sich in ihrer Ausgestaltung nicht auf die vorstehend dargestellte Ausführungsform. Insbesondere ist die konkrete Ausgestaltung der TO-Gehäuse und der darin verwirklichten integrierten Koppeloptiken 173, 26 lediglich beispielhaft zu verstehen. Auch ist grundsätzlich denkbar, dass der Strahlteiler 7 in anderer Weise in dem Gehäuse der Sendeeinheit 1 integriert ist, beispielsweise durch Aufkleben eines schrägen Teils auf eine im Schnitt im wesentlichen rechtwinklig ausgebildete Kappe. Auch kann vorgesehen sein, dass gegenüber der Darstellung der Figur die Sendeeinheit und die Empfangseinheit vertauscht sind und der Strahlteiler in dem Gehäuse der Empfangseinheit realisiert ist. Weiter sind beispielsweise die dargestellten Dimensionen und die konkrete Ausgestaltung des Gehäuses 3 sowie des optischen Anschlusses 4 lediglich beispielhaft zu verstehen.

## Patentansprüche

1. Sende- und Empfangsmodul für eine bidirektionale optische Datenübertragung mit
- einer mit einem eigenen Gehäuse versehenen Sendeeinheit (1), die Licht einer bestimmten Wellenlänge aussendet,
- einer mit einem eigenen Gehäuse versehenenen Empfangseinheit (2), die Licht einer bestimmten Wellenlänge detektiert,
- einem optischen Anschluss (4) für eine mit der Sendeeinheit (1) und der Empfangseinheit (2) optisch gekoppelte oder optische koppelbare Lichtleitfaser (5),
- einem im Strahlengang zwischen der Sendeeinheit (1) und dem optischen Anschluss (4) und zwischen der Empfangseinheit (2) und dem optischen Anschluss (4) angeordneten Strahlteiler (7),
- einem gemeinsamen Modulgehäuse (3), in das die Sendeeinheit (1) und die Empfangseinheit (2) eingefügt sind und das den optischen Anschluss (4) für die Lichtleitfaser (5) bereitstellt, wobei
- die optischen Achsen (11, 21) von Sendeeinheit (1) und Empfangseinheit (2) winklig zueinander verlaufen,
**dadurch gekennzeichnet,**
**dass** der Strahlteiler (2) in eines der Gehäuse (14) von Sendeeinheit (1) und Empfangseinheit (2) integriert ist.

2. Modul nach Anspruch 1, **dadurch**
**gekennzeichnet, dass**
- das Gehäuse, in das der Strahlteiler (7) integriert ist, eine Kappe (14) mit einem lichtdurchlässigen Fenster aufweist,
- das lichtdurchlässige Fenster in Bezug auf die optische Achse (11) der Einheit (1) schräg verläuft, und
- der Strahlteiler (7) in das lichtdurchlässige Fenster integriert ist.

3. Modul nach Anspruch 1 oder 2, **dadurch gekennzeichnet , dass** das von der Sendeeinheit (1) ausgesandte Licht und das von der Empfangseinheit (2) detektierte Licht die gleiche Wellenlänge aufweisen und der Strahlteiler (2) das durch ihn hindurchtretende Licht in zwei Strahlen aufteilt.

4. Modul nach Anspruch 1 oder 2, **dadurch gekennzeichnet , dass** das von der Sendeeinheit (1) ausgesandte Licht und das von der Empfangseinheit (2) detektierte Licht eine unterschiedliche Wellenlänge aufweisen und der Strahlteiler (7) als wellenlängenselektiver Filter ausgebildet ist.

5. Modul nach Anspruch 4, **dadurch gekennzeichnet, dass** der wellenlängenselektive Filter (7) ein WDM- oder DWDM-Filter ist.

6. Modul nach Anspruch 4, **dadurch gekennzeichnet, dass** der wellenlängenselektive Filter (7) ein HochpassFilter oder ein Tiefpass-Filter ist, der ab einer oder bis zu einer bestimmten Wellenlänge einfallendes Licht reflektiert.

7. Modul nach mindestens einem der vorangehenden Ansprüche, **dadurch gekennzeichnet, dass** in die Sendeeinheit (1) eine Koppeloptik (175, 173) mit einer Mikrolinse (173) integriert ist und das von der Sendeeinheit (1) ausgesandte Licht ausschließlich unter Verwendung der Mikrolinse (173) und ohne die Verwendung einer weiteren Koppeloptik Licht in die Lichtleitfaser (5) des optischen Anschlusses (4) einkoppelt.

8. Modul nach mindestens einem der vorangehenden Ansprüche, **dadurch gekennzeichnet, dass** der Strahlteiler (7) in das Gehäuse (14) der Sendeeinheit (1) integriert ist.

9. Modul nach mindestens einem der vorangehenden Ansprüche, **dadurch gekennzeichnet, dass** in die Empfangseinheit (2) eine Koppeloptik (26) integriert ist, die empfangenes Licht auf ein Empfangsbauelement (27) der Empfangseinheit (2) fokussiert.

10. Modul nach den Ansprüchen 2 und 9, **dadurch gekennzeichnet, dass** das Gehäuse der Empfangseinheit (2) ebenfalls eine Kappe (24) aufweist und die Koppeloptik (26) in die Kappe (24) integriert ist.

11. Modul nach mindestens einem der vorangehenden Ansprüche, **dadurch gekennzeichnet, dass** die Empfangseinheit (2) mit einem Blockfilter (6) abgedeckt ist, der für von der Sendeeinheit (1) ausgesandtes Licht nichttransparent ist.

12. Modul nach Anspruch 11, **dadurch gekennzeichnet, dass** der Blockfilter (6) in dem Modulgehäuse (3) gelagert ist.

13. Modul nach mindestens einem der vorangehenden Ansprüche, **dadurch gekennzeichnet, dass** der optische Anschluss (4) einen fest in dem Modulgehäuse (3) angeordneten Faserstummel (5) enthält.

14. Modul nach mindestens einem der Ansprüche 1 bis 12, **dadurch gekennzeichnet, dass** der optische Anschluss (4) als Steckerbuchse für einen optischen Stecker ausgebildet ist.

15. Modul nach mindestens einem der vorangehenden Ansprüche, **gekennzeichnet durch** passive Justagestrukturen, die eine passive Justage der Sendeeinheit (1) in Bezug auf das Modulgehäuse (3) ermöglichen.

16. Modul nach mindestens einem der vorangehenden Ansprüche, **dadurch gekennzeichnet , dass** die optische Achse (11) der Sendeeinheit (1) und die optische Achse (21) der Empfangseinheit (2) in einem Winkel von 55° bis 65°, bevorzugt von 60° zueinander verlaufen.

17. Modul nach mindestens einem der vorangehenden Ansprüche, **dadurch gekennzeichnet , dass** der Abstand zwischen dem Strahlteiler (7) und der Lichtleitfaser (5) zwischen 1,5 und 3 mm, inbesondere zwischen 2 und 2,5 mm beträgt.

18. Modul nach mindestens einem der vorangehenden Ansprüche, **dadurch gekennzeichnet**, das Gehäuse (12, 14) der Sendeeinehit (1) und das Gehäuse (22, 24) der Empfangseinheit (2) jeweils als hermetisch gekapseltes TO-Gehäuse ausgebildet ist.
